(19) Europäisches Patentamt
European Patent Office
Office européen des brevets

(11) **EP 3 547 065 A1**

(12) **DEMANDE DE BREVET EUROPEEN**

(43) Date de publication:
**02.10.2019 Bulletin 2019/40**

(51) Int Cl.:
*G05D 1/10* (2006.01)    *G08G 5/00* (2006.01)

(21) Numéro de dépôt: **19163527.5**

(22) Date de dépôt: **18.03.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **27.03.2018 FR 1852633**

(71) Demandeur: **Airbus Operations S.A.S.**
**31060 Toulouse (FR)**

(72) Inventeurs:
• **LEBAS, Julie**
**31200 TOULOUSE (FR)**
• **TORRALBA, José**
**31330 MERVILLE (FR)**
• **ROBIN, Jean-Luc**
**31240 SAINT-JEAN (FR)**

(74) Mandataire: **Gicquel, Olivier Yves Gérard**
**Airbus Opérations (S.A.S)**
**XIF - M0101/1**
**316, route de Bayonne**
**31060 Toulouse Cedex (FR)**

(54) **SYSTÈME ET PROCÉDÉ DE CONTRÔLE DE LA TRAJECTOIRE D'UN AERONEF**

(57)    Le système de contrôle (1) comprend un module de détermination de position configuré pour déterminer une position de sécurité (PS) correspondant à une position, dans laquelle un aéronef suiveur (AC2) n'est pas soumis à des effets de vortex droit (V1) et de vortex gauche (V2) générés par un aéronef meneur (AC1) tout en restant en vol en formation (F), un module de protection configuré pour amener et maintenir l'aéronef suiveur (AC2) dans la position de sécurité (PS) lorsque l'aéronef suiveur (AC2) comprend une extrémité d'aile se trouvant à une position qui présente une signature du vortex droit (V1) inférieure ou égale à une première signature prédéterminée ou qui présente une signature du vortex gauche (V2) supérieure ou égale à la première signature prédéterminée ou qui présente une signature du vortex droit (V1) supérieure ou égale à une deuxième signature prédéterminée ou qui présente une signature du vortex gauche (V2) inférieure ou égale à la deuxième signature prédéterminée.

Fig. 3

**Description**

La présente invention concerne un procédé et un système de contrôle de la trajectoire d'un aéronef, dit aéronef suiveur, susceptible d'être soumis à des vortex générés par un aéronef, dit aéronef meneur, qui le précède, lesdits aéronefs meneur et suiveur réalisant un vol en formation.

Un vol en formation comprend au moins deux aéronefs, notamment des avions de transport, à savoir un aéronef meneur (ou leader), et un ou plusieurs aéronefs suiveurs. Les aéronefs suiveurs volent en suivant l'aéronef qu'ils suivent directement (à savoir l'aéronef meneur ou un autre aéronef suiveur) de manière à maintenir un espacement constant entre eux. Dans une application particulière, notamment en vol de croisière, les aéronefs volent les uns derrière les autres au même niveau de vol, avec le même cap et la même vitesse. On peut également prévoir d'appliquer aux aéronefs suiveurs des ordres de commande de vitesse qui sont tels qu'ils permettent auxdits aéronefs suiveurs d'avoir la même position, la même vitesse, et la même accélération qu'avait l'aéronef meneur, à des durées antérieures données.

On sait qu'un aéronef en vol génère dans son sillage des vortex (ou turbulences de sillage). On entend par vortex (ou turbulence de sillage), une turbulence (ou un tourbillon) aérodynamique qui se forme en aval d'un aéronef.

Un avion en vol génère dans son sillage, principalement, deux vortex, à savoir un vortex droit et un vortex gauche partant respectivement de chacune de ses ailes du fait de la différence de pression entre l'intrados et l'extrados de l'aile, et de la déflexion de l'écoulement d'air vers le bas qui en résulte. Ces vortex sont des tourbillons contrarotatifs et sont caractérisés par un champ de vent globalement ascendant à l'extérieur des tourbillons et globalement descendant entre les tourbillons.

À partir des ailes, les vortex tendent d'abord à se rapprocher l'un de l'autre, puis à maintenir une distance plus ou moins constante entre eux tout en perdant de l'altitude par rapport à l'altitude à laquelle ils ont été générés.

Du fait de cette configuration des vortex, il est intéressant, pour un aéronef suiveur qui suit l'aéronef meneur générant les vortex, de pouvoir profiter des vents ascendants afin de réduire sa consommation de carburant, et donc d'amener l'aéronef suiveur dans une position appropriée.

Toutefois, les vortex peuvent déstabiliser le vol de l'aéronef suiveur asservi sur au moins un des vortex, ce qui peut nuire au confort des passagers de l'aéronef.

La présente invention a pour objet de pallier ces inconvénients.

À cet effet, l'invention concerne un procédé de contrôle de la trajectoire d'un aéronef tel que revendiqué dans la revendication 1.

Ainsi, grâce à l'invention, l'aéronef suiveur est protégé du vortex sur lequel il est asservi par la surveillance de la signature dudit vortex. Un éventuel changement de signe de signature indiquant, par exemple, que l'aéronef suiveur commence à se faire aspirer par ledit vortex entraîne un éloignement de l'aéronef suiveur vers une position de sécurité.

L'invention, avec ses caractéristiques et avantages, ressortira plus clairement à la lecture de la description faite en référence aux dessins annexés dans lesquels :

- la figure 1 représente schématiquement un mode de réalisation du système de contrôle,
- la figure 2 représente schématiquement un mode de réalisation du procédé de contrôle,
- la figure 3 est une représentation schématique d'un vol en formation montrant un aéronef meneur générant des vortex et deux position possibles pour un aéronef suiveur par rapport à ces vortex,
- la figure 4 est un graphe représentant les valeurs de signature d'un vortex droit généré par l'aile droite d'un aéronef meneur,
- la figure 5a représente un aéronef suiveur présentant une vitesse supérieure à une vitesse d'un aéronef meneur avec lequel l'aéronef suiveur vole en formation,
- la figure 5b représente un aéronef suiveur présentant une vitesse sensiblement égale à la vitesse de l'aéronef meneur avec lequel l'aéronef suiveur vole en formation à une marge de distance souhaitée,
- la figure 6 est un graphe représentant le critère de décélération séparant une région pour laquelle l'aéronef suiveur peut rester dans sa position courante et une région pour laquelle l'aéronef suiveur est amené dans la position de sécurité,
- la figure 7 est une représentation schématique d'un vol en formation montrant un aéronef meneur effectuant une manoeuvre anormale verticalement et deux positions possibles pour un aéronef suiveur,
- la figure 8 est une représentation schématique d'un vol en formation montrant un aéronef meneur effectuant une manoeuvre anormale latéralement et deux position possibles pour un aéronef suiveur.

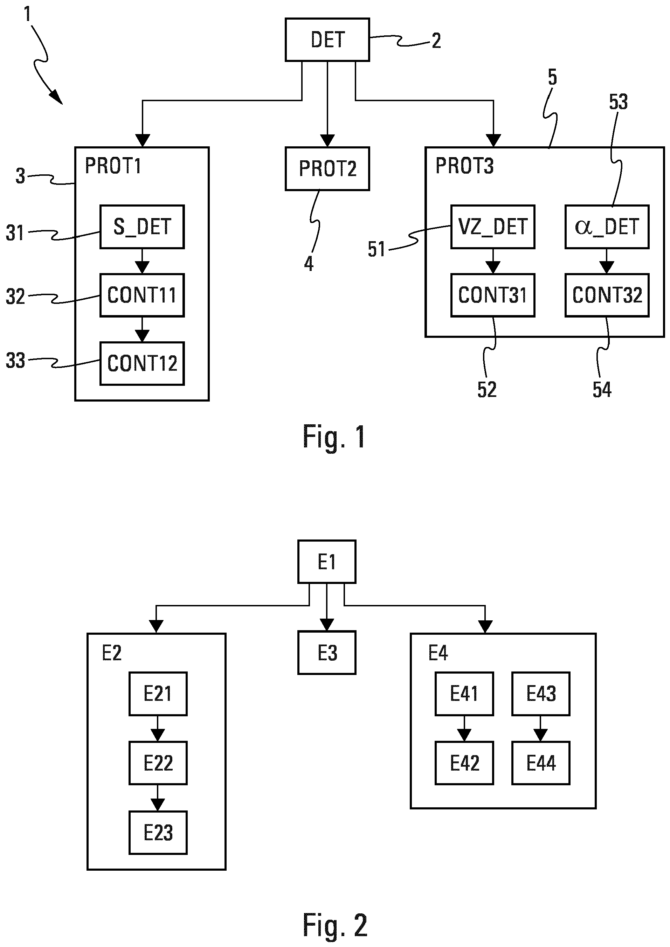

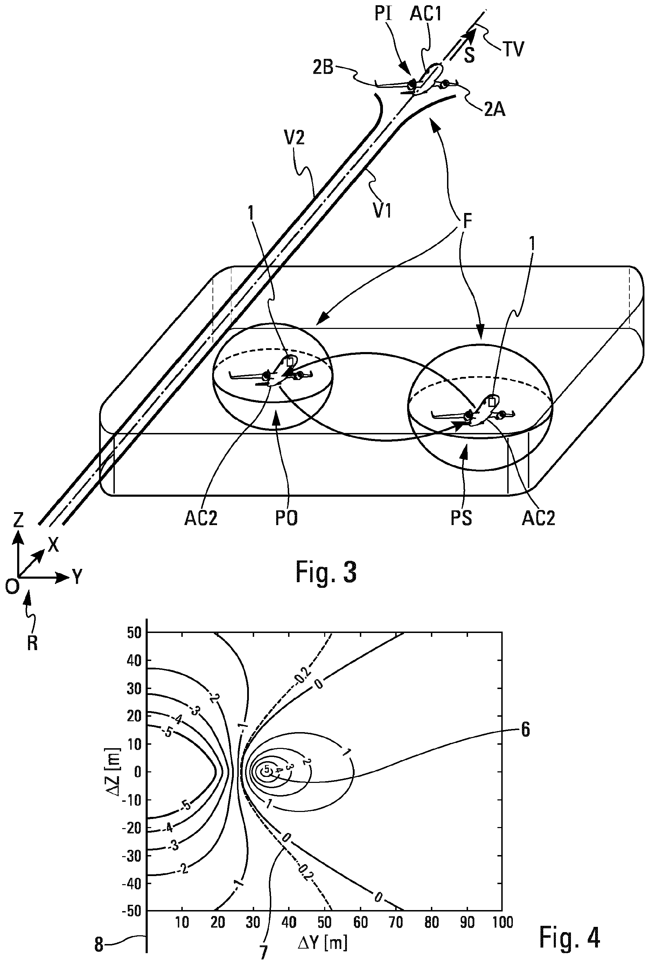

Le système de contrôle 1 permettant d'illustrer l'invention et représenté de façon schématique sur la figure 1, est un système de contrôle de la trajectoire d'un aéronef suiveur AC2, par rapport à des vortex V1 et V2 générés par un aéronef meneur AC1 qui le précède, comme illustré sur les figures 3, 7 et 8. Lesdits aéronefs meneur et suiveur AC1, AC2, par exemple deux avions de transport, réalisent un vol en formation F. Le système de contrôle 1 est monté sur l'aéronef suiveur AC2, comme représenté très schématiquement sur la figure 3.

L'aéronef meneur AC1 et l'aéronef suiveur AC2 peuvent correspondre à un couple d'aéronefs dont l'aéronef meneur AC1 est l'aéronef meneur AC1 de toute une formation F et l'aéronef suiveur AC2 est l'aéronef qui suit directement derrière l'aéronef meneur AC1. L'aéronef meneur AC1 et l'aéronef suiveur AC2 peuvent également correspondre à un couple d'aéronefs dont l'aéronef meneur AC1 est un aéronef qui suit un autre aéronef et l'aéronef suiveur AC2 est l'aéronef qui suit directement derrière l'aéronef meneur AC1.

De façon usuelle, la formation F comprend l'aéronef meneur AC1 et un ou plusieurs aéronef(s) suiveur(s), à savoir un seul aéronef suiveur AC2 sur l'exemple de la figure 3, qui suivent l'aéronef meneur AC1 (situé à une position PI) de manière à maintenir un espacement constant entre eux. Dans une application préférée, en particulier en vol de croisière, les aéronefs AC1 et AC2 volent l'un derrière l'autre au même niveau de vol, avec le même cap et la même vitesse.

Dans un mode de réalisation préféré, le système de contrôle 1 fait partie d'une unité (non représentée spécifiquement) de gestion de vol en formation, qui est embarquée sur l'aéronef suiveur AC2. Une telle unité est configurée pour gérer le vol en formation au moins pour l'aéronef suiveur AC2.

L'aéronef meneur AC1 suit une trajectoire de vol TV, et il génère dans son sillage, principalement, deux vortex V1 et V2, à savoir un vortex V1 et V2 partant de chacune de ses ailes 2A et 2B du fait de la différence de pression entre l'intrados et l'extrados de chaque aile, et de la déflexion de l'écoulement d'air vers le bas qui en résulte. Ces vortex V1 et V2 sont des tourbillons contrarotatifs et sont caractérisés par un champ de vent globalement ascendant à l'extérieur des tourbillons et globalement descendant entre les tourbillons. À partir des ailes 2A et 2B, les vortex V1 et V2 tendent d'abord à se rapprocher l'un de l'autre, puis à maintenir une distance plus ou moins constante entre eux tout en perdant de l'altitude par rapport à l'altitude à laquelle ils ont été générés.

Pour faciliter la description suivante, on détermine un repère R orthonormé, représenté sur la figure 3 et formé de trois axes (ou directions) X, Y et Z orthogonaux entre eux et passant par un point O, qui sont tels que :

- X est l'axe longitudinal du fuselage de l'aéronef meneur AC1 orienté positivement dans le sens d'avancement S de l'aéronef meneur AC1 ;
- Z est un axe vertical qui forme avec l'axe X un plan correspondant au plan vertical de symétrie de l'aéronef meneur AC1 ; et
- Y est un axe transversal qui est orthogonal auxdits axes X et Z.

Bien que, pour des raisons de clarté, le point O soit représenté à l'extérieur de l'aéronef meneur AC1 sur la figure 3, il peut correspondre au centre de gravité de l'aéronef meneur AC1.

Le système de contrôle 1 permet de contrôler la trajectoire d'un aéronef suiveur AC2, susceptible d'être soumis à un vortex droit V1 généré au côté droit d'un aéronef meneur AC1 ou à un vortex gauche V2 généré au côté gauche de l'aéronef meneur AC1. Le côté droit et le côté gauche étant définis en regardant dans le sens d'avancement S de l'aéronef meneur AC1 dans la direction de l'axe X.

Le système de contrôle 1 comprend, comme représenté sur la figure 1 :

- un module de détermination de position DET (DET pour « détermination module » en anglais) 2 configuré pour déterminer, à l'aide d'un modèle de transport de vortex, une position PS dite de sécurité correspondant à une position, dans laquelle l'aéronef suiveur AC2 n'est pas soumis à des effets des vortex gauche ou droit V1, V2 générés par l'aéronef meneur AC1 tout en restant en vol en formation F ;
- un module de protection PROT1 (PROT pour « protection module » en anglais) 3 configuré pour amener et maintenir l'aéronef suiveur AC2 dans la position de sécurité PS lorsque l'aéronef suiveur AC2 comprend une extrémité d'aile se trouvant à une position :

  ○ qui présente une signature du vortex droit V1 inférieure ou égale à une première signature prédéterminée. L'aéronef suiveur AC2 est maintenu dans la position courante PO si la signature du vortex droit V1 est supérieure à la première signature prédéterminée ou
  ○ qui présente une signature du vortex gauche V2 supérieure ou égale à la première signature prédéterminée. L'aéronef suiveur AC2 est maintenu dans la position courante PO si la signature du vortex gauche V2 est inférieure à la première signature prédéterminée ou
  ○ qui présente une signature du vortex droit V1 supérieure ou égale à une deuxième signature prédéterminée, l'aéronef suiveur AC2 étant maintenu dans la position courante PO si la signature du vortex droit V1 est inférieure à la deuxième signature prédéterminée ou
  ○ qui présente une signature du vortex gauche V2 inférieure ou égale à la deuxième signature prédéterminée, l'aéronef suiveur AC2 étant maintenu dans la position courante PO si la signature du vortex gauche V2 est supérieure à la deuxième signature prédéterminée.

Le module de protection 3 peut comprendre un sous-module de détermination S_DET 31 configuré pour déterminer une signature du vortex droit V1 et une signature du vortex gauche V2.

Par exemple, la signature correspond à un angle de roulis de l'aéronef suiveur AC2 ou à une commande de roulis à bord de l'aéronef suiveur AC2.

La signature d'un vortex peut être calculée par la soustraction entre, d'une part, une estimation d'une réponse de l'aéronef suiveur AC2 aux commandes de vol en cours d'application, hors influence du vortex V1, V2, et, d'autre part, une valeur d'un signal de l'influence du vortex V1, V2.

Le module de protection 3 comprend également un sous-module de commande CONT11 (CONT pour « control module » en anglais) 32 configuré pour amener et maintenir l'aéronef suiveur AC2 dans la position de sécurité PS après une temporisation, la temporisation étant déclenchée lorsque l'un ou l'autre des événements suivants se produit :

- l'aéronef suiveur AC2 situé à droite du vortex droit V1 comprend une extrémité d'aile se trouvant à une position qui présente une signature du vortex droit V1 inférieure ou égale à la première signature prédéterminée,
- l'aéronef suiveur AC2 situé à gauche du vortex gauche V2 comprend une extrémité d'aile se trouvant à une position qui présente une signature du vortex gauche V2 supérieure ou égale à la première signature prédéterminée,
- l'aéronef suiveur AC2 situé à droite du vortex droit V1 comprend une extrémité d'aile se trouvant à une position qui présente une signature du vortex droit V1 supérieure ou égale à la deuxième signature prédéterminée,
- l'aéronef suiveur AC2 situé à gauche du vortex gauche V2 comprend une extrémité d'aile se trouvant à une position qui présente une signature du vortex gauche V2 inférieure ou égale à la deuxième signature prédéterminée.

De façon non limitative, la temporisation peut être comprise entre 1 ms et 10 ms.

Le module de protection 3 comprend aussi un sous-module de commande CONT12 33 configuré pour amener et maintenir l'aéronef suiveur AC2 dans la position courante PO quand :

- l'aéronef suiveur AC2 situé à droite du vortex droit V1 comprend une extrémité d'aile se trouvant à une position qui présente une signature du vortex droit V1 supérieure à la première signature prédéterminée ou,
- l'aéronef suiveur AC2 situé à gauche du vortex gauche V2 comprend une extrémité d'aile se trouvant à une position qui présente une signature du vortex gauche V2 inférieure à la première signature prédéterminée ou,
- l'aéronef suiveur AC2 situé à droite du vortex droit V1 comprend une extrémité d'aile se trouvant à une position qui présente une signature du vortex droit V1 inférieure à la deuxième signature prédéterminée ou,
- l'aéronef suiveur AC2 situé à gauche du vortex gauche V2 comprend une extrémité d'aile se trouvant à une position qui présente une signature du vortex gauche V2 supérieure à la deuxième signature prédéterminée.

La figure 4 correspond à un graphe représentant la signature du vortex droit V1 dont le centre est confondu avec l'axe 8. La référence 6 montre la position optimale de l'extrémité de l'aile d'un l'aéronef suiveur AC2 se trouvant à droite du vortex droit V1. La ligne 7 représente la première signature prédéterminée. Dans l'exemple de cette figure, la première signature prédéterminée est fixée à -0,2. Ainsi, si le bout d'aile de l'aéronef suiveur AC2 se situe à droite de la ligne 7, l'aéronef suiveur n'est pas amené dans la position de sécurité PS. L'aéronef suiveur AC2 est amené pour se rapprocher au plus près de la position optimale. Si le bout d'aile de l'aéronef suiveur AC2 se situe à gauche de la ligne 7, le sous-module de commande 32 amène et maintient l'aéronef suiveur AC2 dans la position de sécurité PS après une temporisation.

La deuxième signature prédéterminée correspond à un maximum de signature. Par exemple dans la figure 4, on considère que le maximum de signature correspond à la ligne correspondant à une signature fixée à 5. Ainsi, si l'extrémité de l'aile de l'aéronef suiveur AC2 se déplace de la droite vers la gauche (par exemple à partir d'une position dans laquelle la signature présente une valeur de 1), ladite extrémité passe par un maximum de signature (ligne correspondant à une signature fixée à 5) qui correspond à la deuxième signature prédéterminée. Ainsi, si le bout d'aile de l'aéronef suiveur AC2 se situe à droite de la ligne dont la valeur est fixée à 5, l'aéronef suiveur n'est pas amené dans la position de sécurité PS. L'aéronef suiveur AC2 est amené pour se rapprocher au plus près de la position optimale. Si le bout d'aile de l'aéronef suiveur AC2 a passé la ligne dont la signature est fixée à 5 de la droite vers la gauche, le sous-module de commande 32 amène et maintient l'aéronef suiveur AC2 dans la position de sécurité PS après une temporisation.

De façon avantageuse, le système de contrôle 1 comprend en outre un module de protection PROT2 4. L'aéronef meneur AC1 vole selon une vitesse $V_L$ et l'aéronef suiveur AC2 vole selon une vitesse $V_F$. Le module de protection 4 est configuré pour amener et maintenir l'aéronef suiveur AC2 dans la position de sécurité PS lorsque la vitesse $V_F$ et la vitesse $V_L$ présentent une différence supérieure à un critère de décélération C dépendant de la capacité de décélération de l'aéronef suiveur AC2 et d'une marge de distance souhaitée $\Delta X_M$ pour que l'aéronef suiveur AC2 vole à la même vitesse que l'aéronef meneur AC1. L'aéronef suiveur AC2 est maintenu dans la position courante PO si la différence entre la vitesse $V_F$ et la vitesse $V_L$ est inférieure ou égale au critère de décélération C.

Le module de protection 4 peut être configuré pour vérifier si le potentiel de décélération de l'aéronef suiveur AC2 est suffisant en cas de vitesse excessive par rapport à l'aéronef meneur AC1, de manière à arrêter le rapprochement à une distance $\Delta X_M$ de l'aéronef meneur AC1.

De façon non limitative, le critère de décélération *C* présente l'expression suivante :

$$C = \sqrt{2\gamma_{min}(\Delta X_0 - \Delta X_M)},$$ dans laquelle (figures 3a et 3b) :

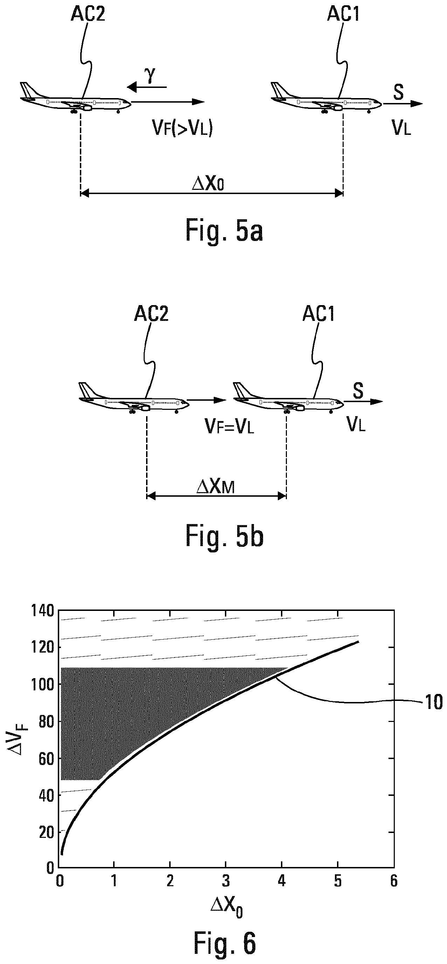

- $\Delta V_F$ représente la différence entre la vitesse $V_F$ de l'aéronef suiveur AC2 et la vitesse $V_L$ de l'aéronef meneur AC1 (en m/s),
- $\gamma_{min}$ représente la capacité de décélération minimale de l'aéronef suiveur AC2 (en m/s$^2$),
- $\Delta X_0$ représente une distance entre l'aéronef meneur AC1 et l'aéronef suiveur AC2 quand l'aéronef suiveur AC2 vole selon la vitesse $V_F$ (en m) (figure 5a),
- $\Delta X_M$ représente la marge de distance souhaitée pour que l'aéronef suiveur AC2 vole à la même vitesse que l'aéronef meneur AC1 (en m) (figure 5b).

De façon non limitative, la capacité de décélération minimale de l'aéronef suiveur AC2 est sensiblement égale à 0,2 m/s$^2$.

La figure 6 représente $\Delta V_F$ en fonction de $\Delta X_0$. La zone hachurée au-dessus de la ligne 10 représente le critère de décélération séparant une région dans laquelle le module de protection 4 amène et maintient l'aéronef suiveur AC2 dans la position de sécurité PS d'une région dans laquelle l'aéronef suiveur AC2 peut rester dans sa position courante PS.

De façon avantageuse encore, le système de contrôle 1 comprend un module de protection PROT3 5 configuré pour amener et à maintenir l'aéronef suiveur AC2 dans une position de sécurité auxiliaire PS, PSA lorsque l'aéronef meneur AC1 effectue une manoeuvre anormale.

Une manoeuvre anormale correspond, par exemple, à une augmentation de vitesse verticale aboutissant à une vitesse verticale $V_z$ supérieure à une vitesse verticale prédéterminée. Une manoeuvre anormale peut également correspondre à une augmentation de la variation de l'assiette latérale aboutissant à une variation d'assiette latérale supérieure à une variation d'assiette latérale prédéterminé.

Selon une particularité, le module de protection 5 comprend :

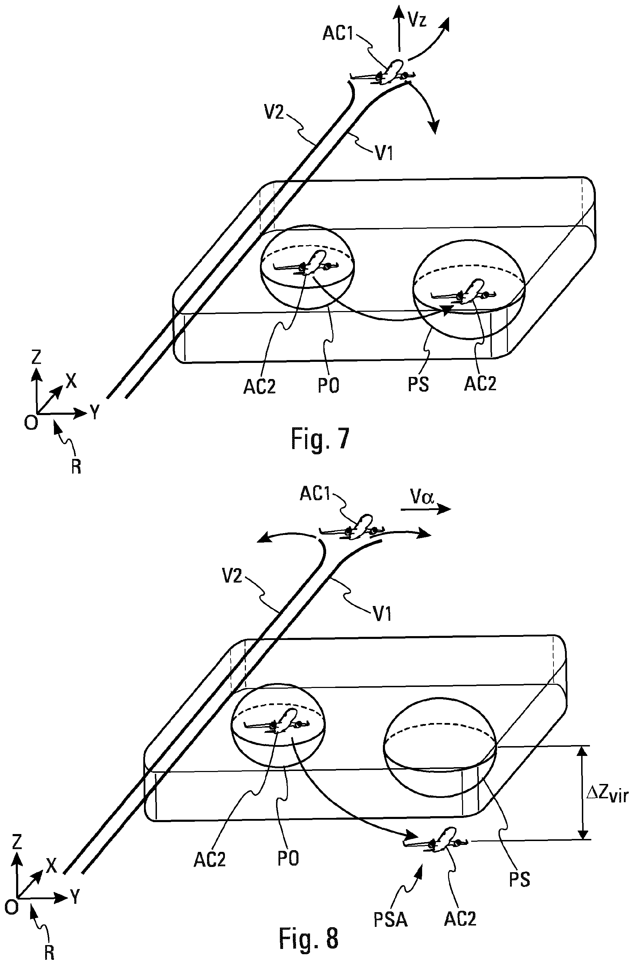

- un sous-module de détermination de vitesse verticale VZ_DET 51 configuré pour déterminer la vitesse verticale $V_z$ de l'aéronef meneur AC1,
- un sous-module de commande CONT31 52 configuré pour amener et maintenir l'aéronef suiveur AC2 dans la position de sécurité auxiliaire PS lorsque la vitesse verticale $V_z$ de l'aéronef meneur AC1 présente une valeur absolue supérieure ou égale à une vitesse verticale prédéterminée, la position de sécurité auxiliaire PS correspondant à la position de sécurité PS déterminée par le module de détermination de position 2 (figure 7).

Selon une autre particularité, le module de protection 5 comprend en outre :

- un sous-module de détermination de variation d'assiette latérale α_DET 53 configuré pour déterminer la variation de l'assiette latérale $V_\alpha$ de l'aéronef meneur AC1,
- un quatrième sous-module de commande configuré pour amener et à maintenir l'aéronef suiveur AC2 dans la position de sécurité auxiliaire lorsque la variation de l'assiette latérale de l'aéronef meneur AC1 présente une valeur absolue supérieure ou égale à une variation d'assiette latérale prédéterminée, la position de sécurité auxiliaire correspondant à la position de sécurité déterminée par le module de détermination de position 2 diminuée ou augmentée d'une hauteur prédéterminée $\Delta Z_{vir}$ (figure 8).

La hauteur prédéterminée $\Delta Z_{vir}$ permet de prémunir l'aéronef suiveur AC2 d'un croisement de vortex dans le cas où l'aéronef meneur AC1 tourne vers l'aéronef suiveur AC2.

De façon non limitative, la hauteur prédéterminée $\Delta Z_{vir}$ est comprise dans une plage allant de 30 m à 300 m.

L'invention concerne également un procédé de contrôle (figure 2) comprenant :

- une étape E1 de détermination de position, mise en oeuvre par le module de détermination de position 2, consistant à déterminer, à l'aide d'un modèle de transport de vortex, la position de sécurité PS ;
- une étape E2 de protection, mise en oeuvre par le module de protection 3, consistant à amener et à maintenir l'aéronef suiveur AC2 dans la position de sécurité PS lorsque l'aéronef suiveur AC2 comprend une extrémité d'aile se trouvant à une position :

  ○ qui présente une signature du vortex droit V1 inférieure ou égale à la première signature prédéterminée, l'aéronef suiveur AC2 étant maintenu dans la position courante PO si la signature du vortex droit V1 est supérieure à la première signature prédéterminée ou
  ○ qui présente une signature du vortex gauche V2 supérieure ou égale à la première signature prédéterminée, l'aéronef suiveur AC2 étant maintenu dans la position courante PO si la signature du vortex gauche V2 est inférieure à la première signature prédéterminée ou
  ○ qui présente une signature de vortex droit V1 supérieure ou égale à une deuxième signature prédéterminée, l'aéronef suiveur AC2 étant maintenu dans la position courante PO si la signature de vortex droit V1 est inférieure à la deuxième signature prédéterminée ou
  ○ qui présente une signature de vortex gauche V2 inférieure ou égale à la deuxième signature prédéterminée, l'aéronef suiveur AC2 étant maintenu dans la position courante PO si la signature de vortex gauche V2 est supérieure à la deuxième signature prédéterminée.

La première étape E2 de protection peut comprendre les sous-étapes suivantes :

- une sous-étape E21 de détermination de signature, mise en oeuvre par le sous-module de détermination 31, consistant à déterminer la signature du vortex droit V1 et du vortex gauche V2 ;
- une sous-étape E22 de commande, mise en oeuvre par la sous-module de commande 32, consistant à amener et à maintenir l'aéronef suiveur AC2 dans la position de sécurité PS après une temporisation, la temporisation étant déclenchée lorsque l'un ou l'autre des événements suivants se produit :

  ○ l'aéronef suiveur AC2 situé à droite du vortex droit V1 comprend une extrémité d'aile se trouvant à une position qui présente une signature du vortex droit V1 inférieure ou égale à la première signature prédéterminée,
  ○ l'aéronef suiveur AC2 situé à gauche du vortex gauche V2 comprend une extrémité d'aile se trouvant à une position qui présente une signature du vortex gauche V2 supérieure ou égale à la première signature prédéterminée,
  ○ l'aéronef suiveur AC2 situé à droite du vortex droit V1 comprend une extrémité d'aile se trouvant à une position qui présente une signature du vortex droit V1 supérieure ou égale à la deuxième signature prédéterminée,
  ○ l'aéronef suiveur AC2 situé à gauche du vortex gauche V2 comprend une extrémité d'aile se trouvant à une position qui présente une signature du vortex gauche V2 inférieure ou égale à la deuxième signature prédéterminée ;

- une sous-étape E23 de commande, mise en oeuvre par le sous-module de commande 33, consistant à amener et à maintenir l'aéronef suiveur AC2 dans la position courante PO quand :

  ○ l'aéronef suiveur AC2 situé à droite du vortex droit V1 comprend une extrémité d'aile se trouvant à une position qui présente une signature du vortex droit V1 supérieure à la première signature prédéterminée ou,
  ○ l'aéronef suiveur AC2 situé à gauche du vortex gauche V2 comprend une extrémité d'aile se trouvant à une position qui présente une signature du vortex gauche V2 inférieure à la première signature prédéterminée ou,
  ○ l'aéronef suiveur AC2 situé à droite du vortex droit V1 comprend une extrémité d'aile se trouvant à une position qui présente une signature du vortex droit V1 inférieure à la deuxième signature prédéterminée ou,
○ l'aéronef suiveur AC2 situé à gauche du vortex gauche V2 comprend une extrémité d'aile se trouvant à une position qui présente une signature du vortex gauche V2 supérieure à la deuxième signature prédéterminée.

Le procédé de contrôle peut comprendre en outre une étape E3 de protection, mise en oeuvre par le module de protection 4. L'étape E3 de protection consiste à amener et à maintenir l'aéronef suiveur AC2 dans la position de sécurité PS lorsque la deuxième vitesse $V_F$ et la première vitesse $V_L$ présentent une différence supérieure au critère de décélération $C$ dépendant de la capacité de décélération de l'aéronef suiveur AC2 et de la marge de distance souhaitée $\Delta X_M$ pour que l'aéronef suiveur AC2 vole à la même vitesse que l'aéronef meneur AC1. L'aéronef suiveur AC2 est maintenu dans la position courante PO si la différence entre la deuxième vitesse $V_F$ et la première vitesse $V_L$ est inférieure ou égale au critère de décélération $C$.

Le procédé de contrôle peut comprendre en outre une étape E4 de protection, mise en oeuvre par le module de protection (5), consistant à amener et à maintenir l'aéronef suiveur AC2 dans la position de sécurité auxiliaire PS, PSA lorsque l'aéronef meneur AC1 effectue une manoeuvre anormale.

Ainsi, l'étape E4 de protection peut comprendre :

- une sous-étape E41 de détermination de vitesse verticale, mise en oeuvre par le sous-module de détermination de vitesse verticale 51, consistant à déterminer la vitesse verticale de l'aéronef meneur (AC1),
- une sous-étape E42 de commande, mise en oeuvre par le sous-module de commande 52, consistant à amener et à maintenir l'aéronef suiveur AC2 dans la position de sécurité auxiliaire PS lorsque la vitesse verticale $V_z$ de l'aéronef meneur AC1 présente une valeur absolue supérieure ou égale à la vitesse verticale prédéterminée, la position de sécurité auxiliaire PS correspondant à la position de sécurité PS déterminée à l'étape E1 de détermination de position.

De plus, l'étape E4 de protection peut comprendre :

- une sous-étape E43 de détermination d'assiette latérale, mise en oeuvre par le sous-module de détermination de variation d'assiette latérale 53, consistant à déterminer la variation de l'assiette latérale de l'aéronef meneur AC1,
- une sous-étape E44 de commande, mise en oeuvre par le sous-module de commande 54, consistant à amener et à maintenir l'aéronef suiveur AC2 dans la position de sécurité auxiliaire PSA lorsque la variation de l'assiette latérale $V_\alpha$ de l'aéronef meneur AC1 présente une valeur absolue supérieure ou égale à une variation d'assiette latérale prédéterminée, la position de sécurité auxiliaire PSA correspondant à la position de sécurité PS déterminée à l'étape E1 de détermination de position diminuée ou augmentée d'une hauteur prédéterminée $\Delta Z_{vir}$.

Ce procédé de contrôle peut être étendu, moyennant des connaissances suffisantes de l'environnement de l'aéronef AC, à des configurations autres que pour le vol en formation pour se protéger des vortex. Par exemple, il peut être étendu à des configurations pour se protéger des vortex rencontrés au niveau des aéroports pendant les phases d'atterrissage.

**Revendications**

1. Procédé de contrôle de la trajectoire d'un aéronef, dit aéronef suiveur (AC2), susceptible d'être soumis à un vortex droit (V1) généré au côté droit d'un aéronef, dit aéronef meneur (AC1) ou à un vortex gauche (V2) généré au côté gauche de l'aéronef meneur (AC1), lesdits premier et deuxième vortex (V1, V2) étant générés par l'aéronef meneur (AC1) qui précède l'aéronef suiveur (AC2), lesdits aéronefs meneur et suiveur (AC1, AC2) réalisant un vol en formation (F), le côté droit et le côté gauche étant définis en regardant dans un sens d'avancement (S) de l'aéronef meneur (AC1),
**caractérisé en ce qu'**il comprend :

- une étape (E1) de détermination de position, mise en oeuvre par un module de détermination de position (2), consistant à déterminer, à l'aide d'un modèle de transport de vortex, une position (PS) dite de sécurité correspondant à une position, dans laquelle l'aéronef suiveur (AC2) n'est pas soumis à des effets des vortex gauche ou droit (V1, V2) générés par l'aéronef meneur (AC1) tout en restant en vol en formation (F) ;
- une première étape (E2) de protection, mise en oeuvre par un premier module de protection (3), consistant à amener et à maintenir l'aéronef suiveur (AC2) dans la position de sécurité (PS) lorsque l'aéronef suiveur (AC2) comprend une extrémité d'aile se trouvant à une position :

◦ qui présente une signature du vortex droit (V1) inférieure ou égale à une première signature prédéterminée, l'aéronef suiveur (AC2) étant maintenu dans une position courante (PO) si la signature du vortex droit (V1) est supérieure à la première signature prédéterminée ou
◦ qui présente une signature du vortex gauche (V2) supérieure ou égale à la première signature prédéterminée, l'aéronef suiveur (AC2) étant maintenu dans la position courante (PO) si la signature du vortex gauche (V2) est inférieure à la première signature prédéterminée ou
◦ qui présente une signature de vortex droit (V1) supérieure ou égale à une deuxième signature prédéterminée, l'aéronef suiveur (AC2) étant maintenu dans la position courante (PO) si la signature de vortex droit (V1) est inférieure à la deuxième signature prédéterminée ou
◦ qui présente une signature de vortex gauche (V2) inférieure ou égale à la deuxième signature prédéterminée, l'aéronef suiveur (AC2) étant maintenu dans la position courante (PO) si la signature de vortex gauche (V2) est supérieure à la deuxième signature prédéterminée.

2. Procédé selon la revendication 1,
**caractérisé en ce que** la première étape (E2) de protection comprend les sous-étapes suivantes :

- une sous-étape (E21) de détermination de signature, mise en oeuvre par un sous-module de détermination (31), consistant à déterminer une signature du vortex droit (V1) et une signature du vortex gauche (V2) ;
- une première sous-étape (E22) de commande, mise en oeuvre par un premier sous-module de commande (32), consistant à amener et à maintenir l'aéronef suiveur (AC2) dans la position de sécurité (PS) après une temporisation, la temporisation étant déclenchée lorsque l'un ou l'autre des événements suivants se produit :

◦ l'aéronef suiveur (AC2) situé à droite du vortex droit (V1) comprend une extrémité d'aile se trouvant à une position qui présente une signature du vortex droit (V1) inférieure ou égale à la première signature prédéterminée,
◦ l'aéronef suiveur (AC2) situé à gauche du vortex gauche (V2) comprend une extrémité d'aile se trouvant à une position qui présente une signature du vortex gauche (V2) supérieure ou égale à la première signature prédéterminée,
◦ l'aéronef suiveur (AC2) situé à droite du vortex droit (V1) comprend une extrémité d'aile se trouvant à une position qui présente une signature du vortex droit (V1) supérieure ou égale à la deuxième signature prédéterminée,
◦ l'aéronef suiveur (AC2) situé à gauche du vortex gauche (V2) comprend une extrémité d'aile se trouvant à une position qui présente une signature du vortex gauche (V2) inférieure ou égale à la deuxième signature prédéterminée ;

- une deuxième sous-étape (E23) de commande, mise en oeuvre par un deuxième sous-module de commande (33), consistant à amener et à maintenir l'aéronef suiveur (AC2) dans la position courante (PO) quand :

  ◦ l'aéronef suiveur (AC2) situé à droite du vortex droit (V1) comprend une extrémité d'aile se trouvant à une position qui présente une signature du vortex droit (V1) supérieure à la première signature prédéterminée ou,
  ◦ l'aéronef suiveur (AC2) situé à gauche du vortex gauche (V2) comprend une extrémité d'aile se trouvant à une position qui présente une signature du vortex gauche (V2) inférieure à la première signature prédéterminée ou,
  ◦ l'aéronef suiveur (AC2) situé à droite du vortex droit (V1) comprend une extrémité d'aile se trouvant à une position qui présente une signature du vortex droit (V1) inférieure à la deuxième signature prédéterminée ou,
  ◦ l'aéronef suiveur (AC2) situé à gauche du vortex gauche (V2) comprend une extrémité d'aile se trouvant à une position qui présente une signature du vortex gauche (V2) supérieure à la deuxième signature prédéterminée.

3. Procédé selon au moins une des revendications 1 ou 2,
   **caractérisé en ce qu'**il comprend en outre une deuxième étape (E3) de protection, mise en oeuvre par un deuxième module de protection (4), l'aéronef meneur (AC1) volant selon une première vitesse ($V_L$), l'aéronef suiveur (AC2) volant selon une deuxième vitesse ($V_F$), la deuxième étape (E3) de protection consistant à amener et à maintenir l'aéronef suiveur (AC2) dans la position de sécurité (PS) lorsque la deuxième vitesse ($V_F$) et la première vitesse ($V_L$) présentent une différence supérieure à un critère de décélération (C) dépendant de la capacité de décélération de l'aéronef suiveur (AC2) et d'une marge de distance souhaitée ($\Delta X_M$) pour que l'aéronef suiveur (AC2) vole à la même vitesse que l'aéronef meneur (AC1), l'aéronef suiveur (AC2) étant maintenu dans la position courante si la différence entre la deuxième vitesse ($V_F$) et la première vitesse ($V_L$) est inférieure ou égale au critère de décélération (C).

4. Procédé selon la revendication 3,

**caractérisé en ce que** le critère de décélération (C) présente l'expression suivante :

$$C = \sqrt{2\gamma_{min}(\Delta X_0 - \Delta X_M)},$$ dans laquelle :

- $\gamma_{min}$ représente la capacité de décélération minimale de l'aéronef suiveur (AC2),
- $\Delta X_0$ représente une distance entre l'aéronef meneur (AC1) et l'aéronef suiveur (AC2) quand l'aéronef suiveur (AC2) vole selon la deuxième vitesse ($V_F$),
- $\Delta X_M$ représente la marge de distance souhaitée pour que l'aéronef suiveur (AC2) vole à la même vitesse que l'aéronef meneur (AC1).

5. Procédé selon la revendication 1,
   **caractérisé en ce qu'**il comprend en outre une troisième étape (E4) de protection, mise en oeuvre par un troisième module de protection (5), consistant à amener et à maintenir l'aéronef suiveur (AC2) dans une position de sécurité auxiliaire (PS, PSA) lorsque l'aéronef meneur (AC1) effectue une manoeuvre anormale.

6. Procédé selon la revendication 5,
   **caractérisé en ce que** la troisième étape (E4) de protection comprend :

   - une sous-étape (E41) de détermination de vitesse verticale, mise en oeuvre par un sous-module de détermination de vitesse verticale (51), consistant à déterminer la vitesse verticale ($V_z$) de l'aéronef meneur (AC1),
   - une troisième sous-étape (E42) de commande, mise en oeuvre par un troisième sous-module de commande (52), consistant à amener et à maintenir l'aéronef suiveur (AC2) dans la position de sécurité auxiliaire (PS) lorsque la vitesse verticale ($V_z$) de l'aéronef meneur (AC1) présente une valeur absolue supérieure ou égale à une vitesse verticale prédéterminée, la position de sécurité auxiliaire (PS) correspondant à la position de sécurité (PS) déterminée à l'étape (E1) de détermination de position.

7. Procédé selon l'une des revendications 5 ou 6,
   **caractérisé en ce que** la troisième étape (E4) de protection comprend en outre :

   - une sous-étape (E43) de détermination de variation d'assiette latérale, mise en oeuvre par un sous-module de détermination de variation d'assiette latérale (53), consistant à déterminer une variation de l'assiette latérale ($V_\alpha$) de l'aéronef meneur (AC1),
   - une quatrième sous-étape (E44) de commande, mise en oeuvre par un quatrième sous-module de commande (54), consistant à amener et à maintenir l'aéronef suiveur (AC2) dans la position de sécurité auxiliaire (PSA) lorsque la variation de l'assiette latérale ($V_\alpha$) de l'aéronef meneur (AC1) présente une valeur absolue supérieure ou égale à une variation d'assiette latérale prédéterminée, la position de sécurité auxiliaire (PSA) correspondant à la position de sécurité (PS) déterminée à l'étape (E1) de détermination de position diminuée ou augmentée d'une hauteur prédéterminée ($\Delta Z_{vir}$).

8. Système de contrôle de la trajectoire d'un aéronef, dit aéronef suiveur (AC2), susceptible d'être soumis à un vortex droit (V1) généré au côté droit d'un aéronef, dit aéronef meneur (AC1) ou à un vortex gauche (V2) généré au côté gauche de l'aéronef meneur (AC1), lesdits premier et deuxième vortex (V1, V2) étant générés par l'aéronef meneur (AC1) qui précède l'aéronef suiveur (AC2), lesdits aéronefs meneur et suiveur (AC1, AC2) réalisant un vol en formation (F), le côté droit et le côté gauche étant définis en regardant dans un sens d'avancement (S) de l'aéronef meneur (AC1),
**caractérisé en ce qu'**il comprend :

   - un module de détermination de position (2) configuré pour déterminer, à l'aide d'un modèle de transport de vortex, une position (PS) dite de sécurité correspondant à une position, dans laquelle l'aéronef suiveur (AC2) n'est pas soumis à des effets des vortex gauche ou droit (V1, V2) générés par l'aéronef meneur (AC1) tout en restant en vol en formation (F) ;
   - un premier module de protection (3) configuré pour amener et maintenir l'aéronef suiveur (AC2) dans la position de sécurité (PS) lorsque l'aéronef suiveur (AC2) comprend une extrémité d'aile se trouvant à une position :

      ◦ qui présente une signature du vortex droit (V1) inférieure ou égale à une première signature prédéterminée, l'aéronef suiveur (AC2) étant maintenu dans la position courante (PO) si la signature du vortex droit (V1) est supérieure à la première signature prédéterminée ou
      ◦ qui présente une signature du vortex gauche (V2) supérieure ou égale à la première signature prédéterminée, l'aéronef suiveur (AC2) étant maintenu dans la position courante (PO) si la signature du vortex gauche (V2) est inférieure à la première signature prédéterminée,
      ◦ qui présente une signature du vortex droit (V1) supérieure ou égale à une deuxième signature prédéterminée, l'aéronef suiveur (AC2) étant maintenu dans la position courante (PO) si la signature du vortex droit (V1) est inférieure à la deuxième signature prédéterminée ou
      ◦ qui présente une signature du vortex gauche (V2) inférieure ou égale à la deuxième signature prédéterminée, l'aéronef suiveur (AC2) étant maintenu dans la position courante (PO) si la signature du vortex gauche (V2) est supérieure à la deuxième signature prédéterminée.

9. Système selon la revendication 8,
**caractérisé en ce que** le premier module de protection (3) comprend les sous-modules suivants :

   - un sous-module de détermination (31) configuré pour déterminer une signature du vortex droit (V1) et du vortex gauche (V2) ;
   - un premier sous-module de commande (32) configuré pour amener et maintenir l'aéronef suiveur (AC2) dans la position de sécurité (PS) après une temporisation, la temporisation étant déclenchée lorsque l'un ou l'autre des événements suivants se produit :

      ◦ l'aéronef suiveur (AC2) situé à droite du vortex droit (V1) comprend une extrémité d'aile se trouvant à une position qui présente une signature du vortex droit (V1) inférieure ou égale à la première signature prédéterminée,
      ◦ l'aéronef suiveur (AC2) situé à gauche du vortex gauche (V2) comprend une extrémité d'aile se trouvant à une position qui présente une signature du vortex gauche (V2) supérieure ou égale à la première signature prédéterminée,
      ◦ l'aéronef suiveur (AC2) situé à droite du vortex droit (V1) comprend une extrémité d'aile se trouvant à une position qui présente une signature du vortex droit (V1) supérieure ou égale à la deuxième signature prédéterminée,
      ◦ l'aéronef suiveur (AC2) situé à gauche du vortex gauche (V2) comprend une extrémité d'aile se trouvant à une position qui présente une signature du vortex gauche (V2) inférieure ou égale à la deuxième signature prédéterminée ;

   - un deuxième sous-module de commande (33) configuré pour amener et maintenir l'aéronef suiveur (AC2) dans la position courante (PO) quand :

      ◦ l'aéronef suiveur (AC2) situé à droite du vortex droit (V1) comprend une extrémité d'aile se trouvant à une position qui présente une signature du vortex droit (V1) supérieure à la première signature prédéterminée ou,

∘ l'aéronef suiveur (AC2) situé à gauche du vortex gauche (V2) comprend une extrémité d'aile se trouvant à une position qui présente une signature du vortex gauche (V2) inférieure à la première signature prédéterminée ou

∘ l'aéronef suiveur (AC2) situé à droite du vortex droit (V1) comprend une extrémité d'aile se trouvant à une position qui présente une signature du vortex droit (V1) inférieure à la deuxième signature prédéterminée ou,

∘ l'aéronef suiveur (AC2) situé à gauche du vortex gauche (V2) comprend une extrémité d'aile se trouvant à une position qui présente une signature du vortex gauche (V2) supérieure à la deuxième signature prédéterminée.

10. Système selon au moins une des revendications 8 ou 9,
**caractérisé en ce qu'**il comprend en outre un deuxième module de protection (4), l'aéronef meneur (AC1) volant selon une première vitesse ($V_L$), l'aéronef suiveur (AC2) volant selon une deuxième vitesse ($V_F$), le deuxième module de protection (4) étant configuré pour amener et maintenir l'aéronef suiveur (AC2) dans la position de sécurité (PS) lorsque la deuxième vitesse ($V_F$) et la première vitesse ($V_L$) présentent une différence supérieure à un critère de décélération ($C$) dépendant de la capacité de décélération de l'aéronef suiveur (AC2) et d'une marge de distance souhaitée ($\Delta X_M$) pour que l'aéronef suiveur (AC2) vole à la même vitesse que l'aéronef meneur (AC1), l'aéronef suiveur (AC2) étant maintenu dans la position courante (PO) si la différence entre la deuxième vitesse ($V_F$) et la première vitesse ($V_L$) est inférieure ou égale au critère de décélération ($C$).

11. Système selon l'une quelconque des revendications 8 à 10,
**caractérisé en ce qu'**il comprend en outre un troisième module de protection (5) configuré pour amener et pour maintenir l'aéronef suiveur (AC2) dans une position de sécurité auxiliaire (PS, PSA) lorsque l'aéronef meneur (AC1) effectue une manoeuvre anormale.

12. Système selon la revendication 11,
**caractérisé en ce que** le troisième module de protection (5) comprend :

- un sous-module de détermination de vitesse verticale (51) configuré pour déterminer la vitesse verticale ($V_z$) de l'aéronef meneur (AC1),
- un troisième sous-module de commande (52) configuré pour amener et maintenir l'aéronef suiveur (AC2) dans la position de sécurité auxiliaire (PS) lorsque la vitesse verticale ($V_z$) de l'aéronef meneur (AC1) présente une valeur absolue supérieure ou égale à une vitesse verticale prédéterminée, la position de sécurité auxiliaire (PS) correspondant à la position de sécurité (PS) déterminée par le module de détermination de position (2).

13. Système selon l'une des revendications 11 ou 12,
**caractérisé en ce que** le troisième module de protection (5) comprend en outre :

- un sous-module de détermination de variation d'assiette latérale (53) configuré pour déterminer une variation de l'assiette latérale ($V_\alpha$) de l'aéronef meneur (AC1),
- un quatrième sous-module de commande configuré pour amener et pour maintenir l'aéronef suiveur (AC2) dans la position de sécurité auxiliaire (PSA) lorsque la variation de l'assiette latérale ($V_\alpha$) de l'aéronef meneur (AC1) présente une valeur absolue supérieure ou égale à une variation d'assiette latérale prédéterminée, la position de sécurité auxiliaire (PSA) correspondant à la position de sécurité (PS) déterminée par le module de détermination de position diminuée ou augmentée d'une hauteur prédéterminée ($\Delta Z_{vir}$).

Fig. 1

Fig. 2

Fig. 3

Fig. 4

AC2            AC1

$\gamma$

$V_F (>V_L)$      S

$V_L$

$\triangle X_0$

## Fig. 5a

AC2            AC1

$V_F = V_L$      S

$V_L$

$\triangle X_M$

## Fig. 5b

10

$\triangle X_0$

$\triangle V_F$

## Fig. 6

Fig. 7

Fig. 8

**Europäisches Patentamt**
**European Patent Office**
**Office européen des brevets**

# RAPPORT DE RECHERCHE EUROPEENNE

Numéro de la demande
EP 19 16 3527

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 772 817 A2 (BOEING CO [US]) 3 septembre 2014 (2014-09-03) * alinéas [0008] - [0030], [0052] - [0076]; figures 1, 2A, 2B, 7 * | 1-13 | INV. G05D1/10 G08G5/00 |
| A | US 2017/301251 A1 (ROBIN JEAN-LUC [FR] ET AL) 19 octobre 2017 (2017-10-19) * alinéas [0012] - [0045], [0066] - [0082]; figures 2, 6, 7 * | 1-13 | |
| A | US 8 447 443 B1 (RYAN JOHN J [US] ET AL) 21 mai 2013 (2013-05-21) * colonne 3, ligne 64 - colonne 4, ligne 36 * * colonne 10, ligne 47 - colonne 13, ligne 25 * * figures 4,5 * | 1-13 | |
| A | DE 10 2016 103704 A1 (DEUTSCHES ZENTRUM FÜR LUFT- UND RAUMFAHRT E V [DE]) 7 septembre 2017 (2017-09-07) * alinéas [0006] - [0020], [0035] - [0041], [0048] - [0050]; figures 1, 3-5 * | 1-13 | |

DOMAINES TECHNIQUES RECHERCHES (IPC)

G05D
G08G

Le présent rapport a été établi pour toutes les revendications

| Lieu de la recherche | Date d'achèvement de la recherche | Examinateur |
|---|---|---|
| Munich | 6 juin 2019 | Etienne, Yves |

**ANNEXE AU RAPPORT DE RECHERCHE EUROPEENNE
RELATIF A LA DEMANDE DE BREVET EUROPEEN NO.**

EP 19 16 3527

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-06-2019

| Document brevet cité au rapport de recherche | | Date de publication | Membre(s) de la famille de brevet(s) | | Date de publication |
|---|---|---|---|---|---|
| EP 2772817 | A2 | 03-09-2014 | CA | 2833877 A1 | 28-07-2014 |
| | | | EP | 2772817 A2 | 03-09-2014 |
| | | | ES | 2649474 T3 | 12-01-2018 |
| | | | US | 2014214243 A1 | 31-07-2014 |
| US 2017301251 | A1 | 19-10-2017 | CN | 107305396 A | 31-10-2017 |
| | | | FR | 3050304 A1 | 20-10-2017 |
| | | | US | 2017301251 A1 | 19-10-2017 |
| US 8447443 | B1 | 21-05-2013 | AUCUN | | |
| DE 102016103704 | A1 | 07-09-2017 | AUCUN | | |

Pour tout renseignement concernant cette annexe : voir Journal Officiel de l'Office européen des brevets, No.12/82

EPO FORM P0460